(19) Europäisches Patentamt European Patent Office Office européen des brevets

(11) **EP 4 760 370 A1**

(12) **EUROPEAN PATENT APPLICATION**

(43) Date of publication:
**17.06.2026 Bulletin 2026/25**

(21) Application number: **24307122.2**

(22) Date of filing: **16.12.2024**

(51) International Patent Classification (IPC):
**G02B 27/01** (2006.01)  **G02B 27/28** (2006.01)
**F21V 8/00** (2006.01)

(52) Cooperative Patent Classification (CPC):
**G02B 27/0172**; G02B 27/283; G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ESSILOR INTERNATIONAL
94220 Charenton-Le-Pont (FR)**

(72) Inventors:
• **REDON, Justine**
  **94600 Choisy-le-Roi (FR)**
• **JOUSSELIN, Caroline**
  **94210 La Varenne St-Hilaire (FR)**

(74) Representative: **Santarelli
Tour Trinity
1 bis Place de la Défense
92400 Courbevoie (FR)**

(54) **OPTICAL DEVICE CONFIGURED TO EQUIP AN AUGMENTED REALITY EYEWEAR DEVICE**

(57) The disclosure provides an optical device (2) configured to equip an augmented reality eyewear device (1), comprising a waveguide (4) having spaced apart reflective facets (10) arranged in series in a first direction (S1) and extending in a second direction (S2) that is transverse to the first direction, the waveguide having a front face (6) and a back face (5), further comprising a polarizer (7) facing the front face and having a polarization axis (P) orthogonal to said second direction, the optical device is configured so that light incoming from an external environment of the device and directed from the front face towards the back face has a same polarization state after passing through the polarizer and then the reflective facets, as well as after passing through the polarizer and then zones devoid of reflective facets.

The disclosure also provides an augmented reality eyewear device comprising such optical device.

Fig.1

## Description

FIELD OF THE DISCLOSURE

The disclosure relates to an optical device for an augmented reality eyewear device and to an augmented reality eyewear device comprising such optical device.

BACKGROUND ART

Augmented reality eyewear devices have a projector and an optical device comprising a waveguide configured to transmit light emitted by the projector to a field of view of a wearer of the augmented reality eyewear device.

The field of view of the wearer is here defined by the augmented reality eyewear device and can be called 'eye box'.

In particular, the projector is configured to project a virtual image which is combined with a real image from a wearer's environment which remains visible through the augmented reality eyewear device.

In other words, through the eye box, the wearer is able to see both the virtual image coming from the projector thanks to the waveguide and the real image coming from the environment, the two images being combined so as to see the result of a superimposition image of the wearer's real environment and a virtual environment. The waveguide may be of the reflective type and may comprise an optical structure configured to guide light by total internal reflection. The optical structure may have multiple partially reflective surfaces arranged so as to enable the injection, propagation, and redirection of light beams from the projector, inside the waveguide and towards the eye box.

For instance, such reflective waveguide may comprise a plurality of spaced apart reflective facets arranged in series in a first direction and each extending in a second direction transverse to the first direction.

Some reflective facets may act as out-coupling facets and are oriented and dimensioned to redirect the light beam out of the waveguide toward the eye box.

In addition, the reflective facets configured to transmit light emitted by the projector also transmit light that is incoming from the wearer's environment towards the eyebox, that is light directed from a front face of the waveguide towards a back face of the waveguide.

In this respect, it is considered that the reflective facets may thus transmit stray light which, under certain conditions, could create visual discomfort.

Patent application WO2018154576 discloses an apparatus comprising a lightguide and a set of three optical components associated with the at least one lightguide. The set includes a pair of first and second matching diffractive optical components and a reflective optical component including a sequence of a plurality of partially reflective, mutually parallel surfaces. The components cooperate for expanding coupled-in light, that is coupled into the lightguide, to coupled-out light.

The reflective optical component of the set is implemented by a sequence of a plurality of partially reflecting surfaces, referred to as facets.

The facets are arranged in series in a first direction and are spaced apart from each other, and extend in a second direction that is transverse to the first direction.

SUMMARY OF THE DISCLOSURE

The present disclosure is directed to an optical device configured to equip an augmented reality eyewear device and to an augmented reality eyewear device comprising such optical device, that are simple and convenient to use and to manufacture.

The present disclosure accordingly provides an optical device configured to equip an augmented reality eyewear device, comprising a waveguide having spaced apart reflective facets arranged in series in a first direction and extending in a second direction that is transverse to the first direction, the waveguide having a front face and a back face opposite to the front face, the optical device further comprising at least one polarizer facing the front face of the waveguide and having a polarization axis that is orthogonal to said second direction, and the optical device is configured so that light incoming from an external environment of the optical device and directed from the front face towards the back face of the waveguide has a same polarization state after passing through the at least one polarizer and then the reflective facets of the waveguide, as well as after passing through the at least one polarizer and then zones of the waveguide that are devoid of reflective facets.

The optical device is configured to equip an augmented reality eyewear device that is configured to be worn by a wearer having his eyes facing the optical device and more particularly facing the waveguide and the at least one polarizer.

From the outside of the augmented reality eyewear device, that is from the front face side, in particular from an observer's point of view which is looking at the wearer, the waveguide and the at least one polarizer are arranged in front of the wearer's eyes.

Thanks to the optical device of the present disclosure, both a first incident light passing through the at least one polarizer and the reflective facets of the waveguide; and a second incident light passing through the at least one polarizer and zones of the waveguide outside the reflective facets, for example between or next to the reflective facets, are polarized in the same direction, which is the direction of the polarization axis of the at least one polarizer.

Indeed, the polarization axis of the at least one polarizer is defined as the axis of transmitted polarization of incident light that traverses the polarizer. In turn, the axis of the cut off polarization is orthogonal to the polarization axis of the at least one polarizer.

Thus, in the optical device of the present disclosure, the at least one polarizer cuts off most of the incident light that is polarized in the direction of extension of the reflective facets, and transmits the incident light that is polarized orthogonally to the direction of extension of the reflective facets.

In parallel, the reflective facets transmit from incident light passing through them, mostly light polarised orthogonally to their extension direction.

In other words, after passing through the optical device, the outcoming light is in the same linear polarization state over the whole device.

This way, differences of polarization between the incident light passing through the reflective facets and the incident light passing outside of the reflective facets are reduced or eliminated.

The above allows, at least from the observer's point of view, that is from a front face side, to hide any unwanted optic patterns, such as dark lines or stripes around the wearer's eyes, thus resulting in a homogenous appearance, in addition to improve, or at least without hindering, the vision of the wearer of both a projected virtual image that is projected by the augmented reality eyewear device trough the waveguide, and real image of the environment.

Therefore, the optical device of the present disclosure can equip an augmented reality eyewear device so that it is convenient both for the observer and the wearer.

For instance, the optical device may be an ophthalmic device, such as spectacle lens.

The present disclosure also provides an eyewear device, more preferably an augmented reality eyewear device configured to be worn by a wearer, comprising at least one projector configured to project a virtual image and at least one optical device comprising a waveguide having spaced apart reflective facets arranged in series in a first direction and extending in a second direction that is transverse to the first direction, the waveguide having a front face and a back face opposite to the front face, and being configured to transmit projected light emitted by the projector to a field of view of the wearer, the optical device further comprising at least one polarizer facing the front face of the waveguide and having a polarization axis that is orthogonal to said second direction, and the optical device is configured so that light incoming from an external environment of the optical device and directed from the front face towards the back face of the waveguide has a same polarization state after passing through the at least one polarizer and then the reflective facets of the waveguide, as well as after passing through the at least one polarizer and then zones of the waveguide that are devoid of reflective facets.

For example, the eyewear device and more preferably the augmented reality eyewear device may be formed by spectacle lenses, more preferably ophthalmic lenses, or by a helmet comprising a visor, or by a facial mask.

In particular, in the eyewear device, more preferably in the augmented reality eyewear device, the optical device may be an ophthalmic device.

Advantageous and convenient features of the optical device and also the augmented reality eyewear device are described below.

The at least one polarizer may face substantially the entire front face of the waveguide, so that the at least one polarizer faces both the reflective facets of the waveguide and the zones of the waveguide that are devoid of reflective facets.

In other words, the at least one polarizer may be disposed facing zones of the waveguide where reflective facets are located and also facing zones of the waveguide where reflective facets are not located.

The facets may be arranged closer to the front face than to the back face and between the at least one polarizer and the back face.

The optical device may further comprise a back lens substrate facing the back face, and the waveguide is arranged between the at least one polarizer and the back lens substrate.

The back lens substrate may comprise a first optical function.

The optical device may further comprise a front lens substrate facing the front face and including the at least one polarizer.

The front lens substrate may comprise at least one additional optical function different to a polarization function and to the first optical function.

For instance, the front lens substrate may comprise at least one additional optical function amongst a hard coating, an anti-reflective coating, an anti-fogging coating and an anti-soiling coating.

The optical device may comprise a back surface that is opposite to the polarizer, and that is concave, and a front surface that is opposite to the back surface, and that is convex, the polarizer and the waveguide being both arranged between the back surface and the front surface, the polarizer being closer to the front surface than to the back surface, and the waveguide being closer to the back surface than to the front surface.

The second direction may be substantially perpendicular to the first direction.

The second direction may be a substantially horizontal direction, and the at least one polarizer may have a substantially vertical polarization axis, when the optical device equips an augmented reality eyewear device that is worn by a wearer.

The second direction may be a substantially vertical direction, and the at least one polarizer may have a substantially horizontal polarization axis, when the optical device equips an augmented reality eyewear device that is worn by a wearer.

The optical device may further comprise an interferential coating, the at least one polarizer being arranged between the interferential coating and the waveguide.

The interferential coating may comprise a stack of dielectric layers, the interferential coating providing the optical device with an additional predetermined polarization efficiency.

The reflective facets extending in the second direction may be out-coupling facets that are configured to reflect light from an inside of the waveguide to an outside of the waveguide.

## BRIEF DESCRIPTION OF THE DRAWINGS

The description of the present disclosure now continues with a detailed description of embodiments given hereinafter by way of non-limiting example and with reference to the appended drawings.

Figure 1 is a schematic side view of an optical device according to the disclosure.

Figure 2 is a schematic side view of another embodiment of the optical device according to the disclosure.

Figure 3 schematically shows the behaviour of the optical device of Figure 1 when light is incoming into the device with a high incidence angle.

Figure 4 schematically shows the behaviour of the optical device of Figure 2 when light is incoming into the device with a high incidence angle.

Figure 5 is a schematic side view of an alternative embodiment of the optical device of Figure 4.

## DETAILED DESCRIPTION OF EXAMPLE EMBODIMENTS

The present disclosure is directed to an optical device for an augmented reality eyewear device.

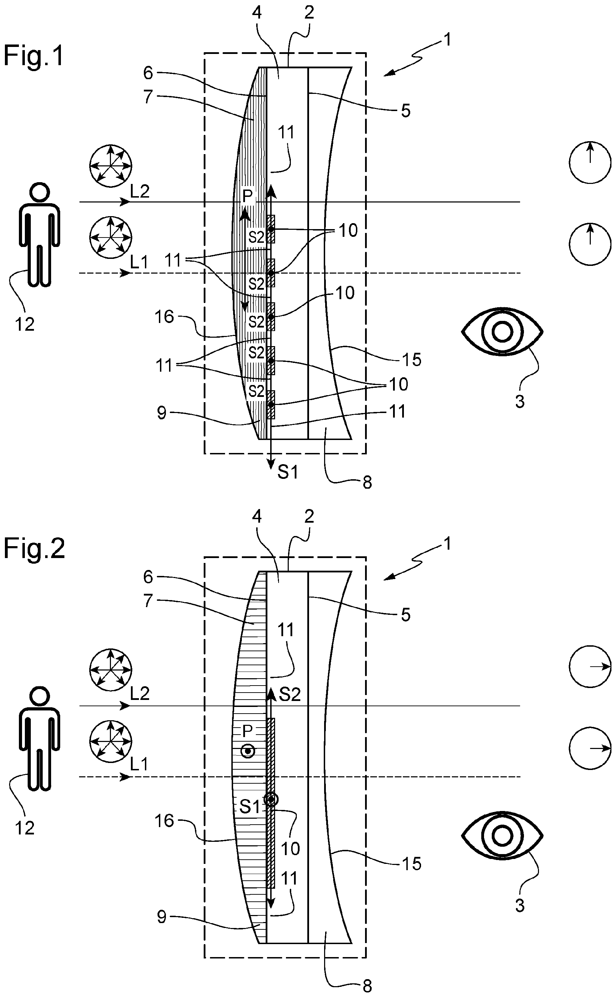

Figures 1 to 5 illustrate schematically an augmented reality device 1 equipped with an optical device 2, such as an ophthalmic device, and which is configured to be worn by a wearer 3.

For example, the augmented reality eyewear device 1 is one of spectacle lenses, a helmet comprising a visor integrating the optical device, or a facial mask.

In the present disclosure, the optical device 2 comprises a waveguide 4 having a back face 5 intended to be placed on a wearer side, and a front face 6 opposite to the back face 5, and intended to be placed on an observer side (external environment) and a polarizer 7 having a polarization axis P and facing the front face 6 of the waveguide 4, being therefore located on the observer side (external environment).

The optical device 2 further comprises a back lens substrate 8 disposed on the back face 5 of the waveguide 4, and a front lens substrate 9, disposed on the front face 6 of the waveguide 4. The back lens substrate 8 defines a back surface 15 of the optical device 2, that is opposite to the polarizer 7, and that is concave.

The front lens substrate 9 defines a front surface 16 of the optical device 2, that is opposite both to the waveguide 4 and to the back surface 15, and that is convex.

The polarizer 7 and the waveguide 4 are thus both arranged between the back surface 15 and the front surface 16.

The back lens substrate 8 may carry an optical prescription, or ophthalmic prescription, defining a first optical function.

The first optical function can be corrective or not corrective.

The front lens substrate 9 here includes the polarizer 7 and may comprise at least one additional optical function different to a polarization function and to the first optical function.

The back lens substrate 8 is here distinct to the waveguide 4, the waveguide 4 being sandwiched between the back lens substrate 8 and the front lens substrate 9.

In alternative, the back lens substrate and the waveguide may form a single piece.

In addition, the polarizer may also be separate from the front lens substrate, and may for example be arranged on the front face of the waveguide and sandwiched between the waveguide and the front lens substrate.

The augmented reality eyewear device 1, and thus the optical device 2, has a conventional wearing position in which an eye of the wearer 3 of the optical device 2 faces the back face 5 of the waveguide 4 and is opposite to the front face 6 of the waveguide 4.

The augmented reality eyewear device 1 comprises a projector (not shown) and the waveguide 4 is configured to transmit light emitted by the projector to a field of view of the wearer 3 of the augmented reality eyewear device. The field of view of the wearer 3 is here defined by the augmented reality eyewear device 1 and can be called 'eye box'.

The waveguide 4 allows to superimpose information, generally computer-generated information, over the real image from a wearer's environment which remains visible through the optical device 2 of the augmented reality eyewear device 1. Thus, the image of the surrounding world of the wearer 3 is augmented with overlaying information.

The augmented reality eyewear device 1 may also comprise a collimating source (not shown) arranged between the projector and the waveguide 4 and which allows to couple the light emitted by the projector in the waveguide 4.

The waveguide 4 is a light conducting element that can be a so-called light-guide optical element (LOE).

Accordingly, the waveguide 4 comprises spaced apart reflective facets 10 which are arranged in series in a first direction S1, and extending in a second direction S2 that is transverse to the first direction S1.

In the illustrated example, the second direction S2 is orthogonal to the first direction S1.

However, more generally, the second direction S2 may be any direction that is angled with respect to the first direction S1.

In particular, the reflective facets 10 may be out-coupling facets that are configured to reflect light from an inside of the waveguide 4 to an outside of the waveguide 4, through the back face 5.

In the optical device 2, the polarization axis of the polarizer 7 is orthogonal to the second direction S2 in which the reflective facets 10 extend.

The polarization axis P of the polarizer 7 is defined as the axis of transmitted polarization of incident light that traverses the polarizer 7. In turn, the axis of the cut off polarization is orthogonal to the polarization axis P of the polarizer 7.

The polarizer 7 is such that it faces substantially the entire front face 6 of the waveguide 4, so that the polarizer 7 faces both the reflective facets 10 and zones 11 of the waveguide 4 that are devoid of reflective facets 10, comprising zones in between the reflective facets 10 and also zones outside of the series of reflective facets 10.

In a first embodiment, illustrated in Figure 1, the second direction S2 in which the reflective facets 10 extend in a substantially horizontal direction and the polarizer 7 has a substantially vertical polarization axis P, when the augmented reality eyewear device 1 is worn by the wearer 3.

A first light L1 and a second light L2, both incoming from an external environment of the optical device 2 from an observer 12 side, are in general not polarized.

The first light L1 passes through the polarizer 7 and a reflective facet 10, from the front face 6 towards the back face 5 of the waveguide 4.

The second light L2 passes through the polarizer 7 and a zone 11 of the waveguide 4 that is devoid of reflective facets 10, from the front face 6 towards the back face 5 of the waveguide 4.

Unpolarized light usually would be polarized horizontally after passing through the reflective facets 10 extending in a substantially horizontal direction, and would remain mainly unpolarized after passing through a zone 11 of the waveguide 4 that is devoid of reflective facets 10.

However, in the optical device 2 according to the disclosure, the polarizer 7 polarizes both the first light L1 and the second light L2, which both enter through the front face 6 of the waveguide 4 in a polarized state, here in a vertically polarized state, that is the horizontal component of light polarization is cut.

Thus, the polarization induced by the reflective facets 10 extending in a substantially horizontal direction has no effect on the first light L1 which contains no more horizontal polarization component.

As a result, both the first light L1 and the second light L2 are in the same polarization state, which here is a vertical polarization state, after passing the waveguide 4 and arriving toward the eyebox.

Figure 2 illustrates a second embodiment in which the reflective facets 10 are extending in a second direction S2 that is substantially vertical, and the polarization axis P of the polarizer 7 is substantially horizontal, when the augmented reality eyewear device 1 is worn by the wearer 3.

Similarly to what is explained above, the polarizer 7 polarizes both the first light L1 and the second light L2, which both enter through the front face 6 of the waveguide in a polarized state, here in a horizontal polarized state, that is the vertical component of light polarization is cut.

Both the first light L1 and the second light L2 are in the same polarization state, which here is a horizontal polarization state, after passing the waveguide 4 and arriving toward the eyebox.

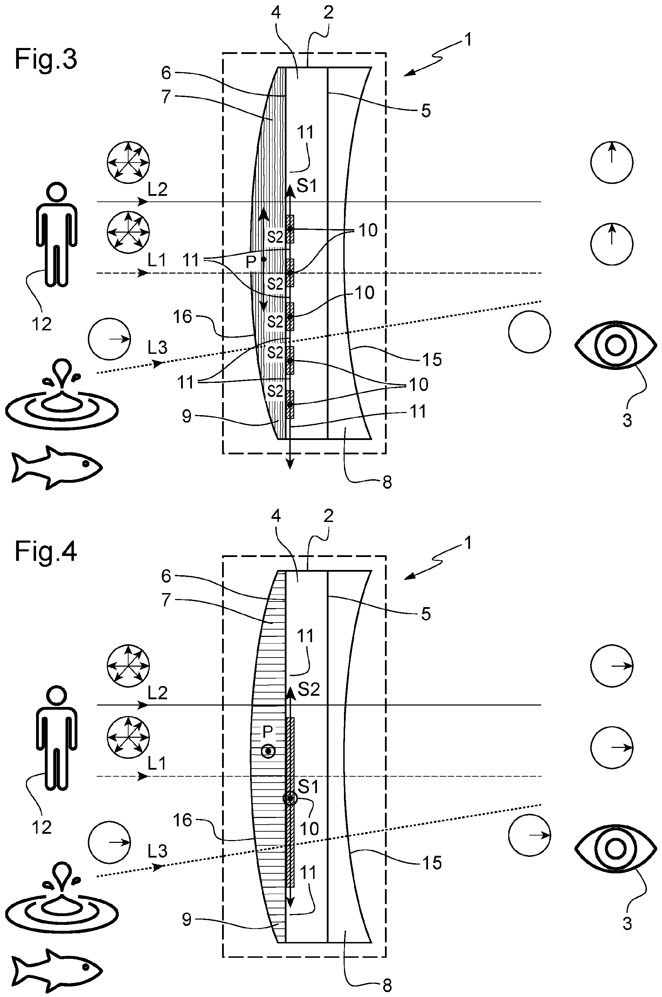

Figures 3 and 4 illustrate a particular situation of incoming light respectively in the first and second embodiments.

A third light L3 that is incoming from the external environment of the optical device 2 from an observer 12 side is polarized, here horizontally polarized. Such polarization may be caused for example by reflection on horizontal surfaces such as water surfaces or glass surfaces, due to S-polarization being more reflected than P-polarization. The third light L3 is incoming with a high incidence angle towards the optical device 2.

As it is shown in Figure 3, in the first embodiment, the horizontally polarized third light L3 meets the polarizer 7 which has a vertical polarization axis P, that is it cuts the horizontal polarization component.

As a result, substantially none of the third light L3 passes through the polarizer 7.

Thus, both the light passing outside the reflective facets 10 and the light passing through the reflective facets 10 are in the same polarization state.

As it is shown in Figure 4, in the second embodiment, the horizontally polarized third light L3 meets the polarizer 7 which has a horizontal polarization axis P, that is it cuts the vertical polarization component.

As a result, the polarizer 7 as barely no effect on the third light L3, and the horizontally polarized third light L3 passes through the polarizer 7 nearly unchanged.

Thus, both the light passing outside the reflective facets 10 and the light passing through the reflective facets 10 are in the same polarization state, even if the incoming light already is in a horizontal polarization state.

However, the third light L3 incoming with a high incidence angle towards the optical device 2 may cause visual discomfort to the wearer 3 in some situations.

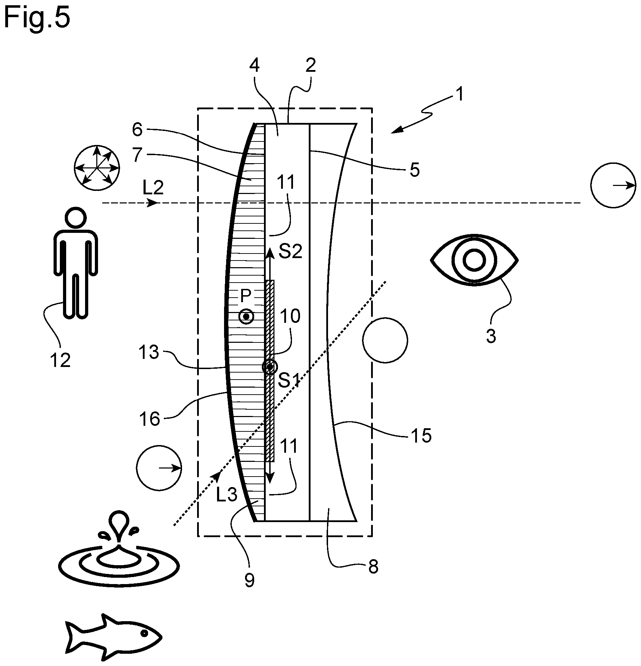

In this respect, Figure 5 illustrates the optical device 2 of Figures 2 and 4 which here further comprises an interferential coating 13, arranged on the front lens substrate 9, so that the polarizer 7 is arranged between the interferential coating 13 and the waveguide 4.

The interferential coating 13 is configured to act as a reflective or mirroring coating, which has a polarizing effect on S-polarized light that is incoming with a high incidence angle from below the wearer 3, that is horizontally polarized light, such as the third light L3.

As a result, the third light L3 is mainly reflected by the interferential coating 13, and is not transmitted towards the wearer 3.

The interferential coating 13 comprises a stack of dielectric layers, for example several layers of silicium oxide ($SiO_2$), and/or zirconium oxide ($ZrO_2$), and/or Tantalum oxide ($Ta_2O_5$) and and/or Titanium oxide ($TiO_2$). The thickness of the dielectric layers is preferably of the order of a few nanometers (nm), for example ranging from 10 nm to 120 nm.

For example, the total thickness of the stack of dielectric layers, that is of the interferential coating 13, may be of the order of 500 nm.

The stack of dielectric layers is preferably a stack of alternating high index layers and low index layers.

According to the invention, the interferential coating 13 (AR coating) comprises at least two layers having a low refractive index, which preferably is lower than 1.55, defined as "LI layer", and at least two layers having a high refractive index, which preferably is equal to or higher than 1.55, defined as "HI layer".

The interferential coating 13 may be a simple stack of layers, since the total number of layers in the interferential coating 13 may be higher than or equal to 4, and in general may be lower than or equal to 16.

According to an aspect of the invention, the total number of HI and LI layers in the interferential coating 13 is higher than or equal to 5, preferably higher than or equal to 6, more preferably higher than or equal to 7 and typically higher than or equal to 8.

According to another aspect of the invention, the total number of HI and LI layers in the interferential coating 13 is lower than or equal to 16, especially lower than or equal to 15, preferably lower than or equal to 14, more preferably lower than or equal to 13, and typically lower than or equal to 12, such as lower than or equal to 11.

For instance, the total number of HI and LI layers in the interferential coating 13 ranges from 8 to 12 layers, preferably from 8 to 11.

The HI layers and LI layers may or may not alternate with each other in the stack of layers.

Two HI layers (or more) may be deposited onto each other, and/or two LI layers (or more) may be deposited onto each other.

In the present application, two HI layers (or more) which are deposited onto each other, are considered as two (or more) separate HI layers and are not considered as being a single HI layer when counting the number of layers of the interferential stack. The same applies to stacks of two or more adjacent LI layers.

In general, the HI layers and LI layers alternate with each other in the stack of layers of the interferential coating 13 according to the invention.

In general, the HI layers are conventional high-refractive-index layers, which may be selected within the high-refractive-index layers which are well known in the art.

The HI layers generally may contain one or more mineral oxides such as, in a non-limiting manner, zirconia ($ZrO_2$), titanium oxide ($TiO_2$), trititanium pentoxide ($Ti_3O_5$), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$i, $Nb_2O_5$i, or $Y_2O_3$.

Optionally, the high-index layers may also contain silica or other low-refractive-index materials, provided that their refractive index is higher than 1.55, or preferably 1.6.

Preferably, the one or more HI layers are made of zirconia ($ZrO_2$) and/or tantalum pentoxide ($Ta_2O_5$).

The LI layers may also be selected within the low-refractive-index layers which are well-known in the art.

The LI layers may comprise, in a non-limiting manner: silicon oxide, or else a mixture of silica and alumina, in particular silica doped with alumina, the latter contributing to increase the thermal resistance of the UV-reflecting interference coating.

Each LI layer is preferably a layer comprising at least 80% by weight silica and better still at least 90% by weight silica, relative to the total weight of the layer, and even better still consists of a silica layer.

Optionally, the low-index layers may also contain high-refractive-index materials, provided that the refractive index of the resulting layer is lower than 1.55.

Thanks to the optical device 2 of the disclosure, both the first incident light passing through the polarizer 7 and the reflective facets 10 of the waveguide 4; and the second incident light passing through the polarizer 7 and zones 11 of the waveguide 4 outside the reflective facets 10, for example between or next to the reflective facets 10, are polarized in the same direction, which is the direction of the polarization axis of the polarizer 7.

In the optical device 2 of the disclosure, the polarizer 7 cuts off the incident light that is polarized in the direction of extension of the reflective facets 10, and transmits the incident light that is polarized orthogonally to the direction of extension of the reflective facets 10.

In other words, after passing through the optical device 2, the outcoming light is in the same linear polarization state over the whole device.

This way, differences of polarization between the incident light passing through the reflective facets 10 and the incident light passing outside of the reflective facets 10 are reduced or eliminated.

The above allows, at least from the observer's point of view to hide any unwanted optic patterns, such as dark lines or stripes around the wearer's eyes, thus resulting in a homogenous appearance, in addition to improve, or at least without hindering, the vision of the wearer 3 of both a projected virtual image that is projected by the augmented reality eyewear device 1 through the waveguide 4, and real image of the environment (including natural environment and digital screens).

Therefore, the optical device 2 of the disclosure can equip an augmented reality eyewear device 1 so that it is convenient both for the observer and the wearer 3.

It is to be noted that the optical device 2 of the disclosure may be configured so as to have a predetermined polarization efficiency (PE), preferably greater than 40%.

In general, polarization efficiency (PE) can be expressed by the following formula:

$$ PE = \frac{T_p - T_s}{T_p + T_s} * 100 $$, where $T_s$ is the light transmission coefficient for S polarization and $T_p$ is the light transmission coefficient for P polarization.

Polarization efficiency (PE) indicates the degree of polarization based on the relative differences between the transmissions of the two considered polarization states. A polarization efficiency of 1 indicates perfect polarization, while a polarization efficiency of 0 indicates no polarization.

For example, the polarization efficiency (PE) may be determined at a predetermined incidence angle of light, for instance 0°, 45° or 90°.

The light transmission coefficient for P polarization $T_p$ and the light transmission coefficient for S polarization $T_s$ can be defined as follows, for an optical device 2 comprising an interferential coating 13:

$$ T_p = 1 - R_p $$

$$ T_s = 1 - R_s $$

$R_s$ and $R_p$ being the visual reflection, obtained by weighting the spectral reflectance of the coating 13 with the spectral luminous efficiency function $V_\lambda$, according to the plane of S polarization, which is perpendicular to the plane of incidence, respectively the plane of P polarization, which is parallel to the plane of incidence.

It should be noted that these formulas are valid for an interferential coating 13 that presents substantially no absorption.

The average value of both the $R_s$ and $R_p$ values corresponds to an $R_v$ value, which is a standard criterion in the art for coatings for instance on ophthalmic and/or anti-reflective lenses. The polarization efficiency of the optical device 2 can be obtained thanks to the arrangements of polarizers 7, waveguides 4, back lens substrates 8 and front lens substrates 9, and material thereof.

The polarization efficiency of the optical device 2 can also be raised thanks to the interferential coating 13, which may be configured so as to provide the optical device 2 with an additional polarization efficiency (PE).

The additional polarization efficiency can preferably be greater than 10.

In an alternative, the polarization properties of the optical device 2 may be defined in terms of predetermined $T_s$ (the light transmission coefficient for S polarization) and/or predetermined $R_s$ (the visual reflection coefficient for S polarization) and $T_p$ (the light transmission coefficient for P polarization) and/or predetermined $R_p$ (the visual reflection coefficient for P polarization).

In variants that are not illustrated, the optical device may comprise more than one polarizer; and/or the augmented reality eyewear device may comprise two or more optical devices.

It should be noted more generally that the present disclosure is not limited to the examples described and represented.

**Claims**

1. Optical device (2) configured to equip an augmented reality eyewear device (1), comprising a waveguide (4) having spaced apart reflective facets (10) arranged in series in a first direction (S1) and extending in a second direction (S2) that is transverse to the first direction (S1), the waveguide (4) having a front face (6) and a back face (5) opposite to the front face (6), the optical device further comprising at least one polarizer (7) facing the front face (6) of the waveguide (4) and having a polarization axis (P) that is orthogonal to said second direction (S2), and the optical device (2) is configured so that light incoming from an external environment of the optical device and directed from the front face (6) towards the back face (5) of the waveguide (4) has a same polarization state after passing through the at least one polarizer (7) and then the reflective facets (10) of the waveguide (4), as well as after passing through the at least one polarizer (7) and then zones (11) of the waveguide (4) that are devoid of reflective facets (10).

2. Optical device (2) according to claim 1, wherein the at least one polarizer (7) faces substantially the entire front face (6) of the waveguide (4), so that the at least one polarizer (7) faces both the reflective facets (10) of the waveguide (4) and the zones (11) of the waveguide (4) that are devoid of reflective facets (10).

3. Optical device (2) according to one of claims 1 and 2, wherein the facets (10) are arranged closer to the front face (6) than to the back face (5) and between the at least one polarizer (7) and the back face (5).

4. Optical device (2) according to any one of claims 1 to 3, further comprising a back lens substrate (8) facing the back face (5), and the waveguide (4) is arranged between the at least one polarizer (7) and the back lens substrate (8).

**5.** Optical device (2) according to claim 4, wherein the back lens substrate (8) comprises a first optical function.

**6.** Optical device (2) according to any one of claims 1 to 5, further comprising a front lens substrate (9) facing the front face (6) and including the at least one polarizer (7).

**7.** Optical device (2) according to claim 6, wherein the front lens substrate (9) comprises at least one additional optical function different to a polarization function and to the first optical function.

**8.** Optical device (2) according to any one of claims 1 to 7, comprising a back surface (15) that is opposite to the polarizer (7), and that is concave, and a front surface (16) that is opposite to the back surface (15), and that is convex, the polarizer (7) and the waveguide (4) being both arranged between the back surface (15) and the front surface (16), the polarizer (7) being closer to the front surface (16) than to the back surface (15), and the waveguide (4) being closer to the back surface (15) than to the front surface (16).

**9.** Optical device (2) according to any one of claims 1 to 8, wherein the second direction (S2) is a substantially horizontal direction and the at least one polarizer (7) has a substantially vertical polarization axis (P), when the optical device (2) equips an augmented reality eyewear device (1) that is worn by a wearer.

**10.** Optical device (2) according to any one of claims 1 to 8, wherein second direction (S2) is a substantially vertical direction and the at least one polarizer has a substantially horizontal polarization axis (P), when the optical device (2) equips an augmented reality eyewear device (1) that is worn by a wearer.

**11.** Optical device (2) according to any one of claims 1 to 10, further comprising an interferential coating (13), the at least one polarizer (7) being arranged between the interferential coating (13) and the waveguide (4).

**12.** Optical device (2) according to claim 11, wherein the interferential coating (13) comprises a stack of dielectric layers, the interferential coating (13) providing the optical device with an additional predetermined polarization efficiency.

**13.** Optical device (2) according to any one of claims 1 to 12, wherein the reflective facets (10) extending in the second direction (S2) are out-coupling facets that are configured to reflect light from an inside of the waveguide (4) to an outside of the waveguide (4).

**14.** Eyewear device (1) configured to be worn by a wearer (3), comprising at least one projector configured to project a virtual image and at least one optical device (2) comprising a waveguide (4) having spaced apart reflective facets (10) arranged in series in a first direction (S1) and extending in a second direction (S2) that is transverse to the first direction (S1), the waveguide (4) having a front face (6) and a back face (5) opposite to the front face (6), and being configured to transmit projected light emitted by the projector to a field of view of the wearer (3), the optical device (2) further comprising at least one polarizer (7) facing the front face (6) of the waveguide (4) and having a polarization axis (P) that is orthogonal to said second direction (S2), and the optical device (2) is configured so that light incoming from an external environment of the optical device (2) and directed from the front face (6) towards the back face (5) of the waveguide (4) has a same polarization state after passing through the at least one polarizer (7) and then the reflective facets (10) of the waveguide (4), as well as after passing through the at least one polarizer (7) and then zones (11) of the waveguide that are devoid of reflective facets (10).

**15.** Eyewear device (1) according to claim 14, being formed by spectacle lenses, or by a helmet comprising a visor, or by a facial mask.

Fig.1

Fig.2

Fig.3

Fig.4

Fig.5

# EUROPEAN SEARCH REPORT

**Application Number**

EP 24 30 7122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/004001 A1 (DANZIGER YOCHAY [IL] ET AL) 6 January 2022 (2022-01-06) | 1,2,4-9, 11-15 | INV.<br>G02B27/01<br>G02B27/28 |
| Y | * paragraphs [0056], [0067] - [0096], [0100]; figures 3,4c,7d,9b * | 10 | |
| | ----- | | ADD.<br>F21V8/00 |
| X | US 2021/033862 A1 (DANZIGER YOCHAY [IL] ET AL) 4 February 2021 (2021-02-04) | 1-3,9, 13-15 | |
| Y | * paragraphs [0021], [0052], [0053], [0071]; figures 2-4,5b,6 * | 10 | |
| | ----- | | |
| Y | US 2019/278086 A1 (OFIR YUVAL [IL]) 12 September 2019 (2019-09-12) * paragraph [0056]; figure 12a * | 10 | |
| | ----- | | |

**TECHNICAL FIELDS SEARCHED (IPC)**

G02B

The present search report has been drawn up for all claims

| Place of search | Date of completion of the search | Examiner |
|---|---|---|
| Munich | 22 May 2025 | Blau, Gerd |

## ANNEX TO THE EUROPEAN SEARCH REPORT
## ON EUROPEAN PATENT APPLICATION NO.

EP 24 30 7122

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | | Publication date |
|---|---|---|---|---|
| US 2022004001 A1 | 06-01-2022 | CN | 215982382 U | 08-03-2022 |
| | | DE | 212019000375 U1 | 23-04-2021 |
| | | JP | 3234728 U | 04-11-2021 |
| | | KR | 20210002032 U | 13-09-2021 |
| | | TW | M642752 U | 21-06-2023 |
| | | TW | 202026685 A | 16-07-2020 |
| | | US | 2022004001 A1 | 06-01-2022 |
| | | WO | 2020095311 A1 | 14-05-2020 |
| US 2021033862 A1 | 04-02-2021 | CN | 112424670 A | 26-02-2021 |
| | | EP | 3824335 A1 | 26-05-2021 |
| | | EP | 4365645 A2 | 08-05-2024 |
| | | IL | 279943 A | 01-03-2021 |
| | | JP | 7411255 B2 | 11-01-2024 |
| | | JP | 2021531498 A | 18-11-2021 |
| | | KR | 20210031705 A | 22-03-2021 |
| | | KR | 20250046344 A | 02-04-2025 |
| | | TW | 202018347 A | 16-05-2020 |
| | | US | 2021033862 A1 | 04-02-2021 |
| | | US | 2022373810 A1 | 24-11-2022 |
| | | US | 2024329395 A1 | 03-10-2024 |
| | | US | 2025155708 A1 | 15-05-2025 |
| | | WO | 2020016772 A1 | 23-01-2020 |
| US 2019278086 A1 | 12-09-2019 | CN | 109154720 A | 04-01-2019 |
| | | EP | 3458898 A1 | 27-03-2019 |
| | | IL | 262566 A | 31-12-2018 |
| | | JP | 6740366 B2 | 12-08-2020 |
| | | JP | 2019517018 A | 20-06-2019 |
| | | KR | 20190008311 A | 23-01-2019 |
| | | TW | 201805692 A | 16-02-2018 |
| | | US | 2019278086 A1 | 12-09-2019 |
| | | WO | 2017199232 A1 | 23-11-2017 |

EPO FORM P0459

For more details about this annex : see Official Journal of the European Patent Office, No. 12/82

**EP 4 760 370 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018154576 A